Europäisches Patentamt

European Patent Office

Office européen des brevets

(11) Veröffentlichungsnummer: **0 281 798**
**A2**

## (12) EUROPÄISCHE PATENTANMELDUNG

(21) Anmeldenummer: **88102180.2**

(22) Anmeldetag: **15.02.88**

(51) Int. Cl.⁴: **H02P 7/00**

(30) Priorität: **11.03.87 DE 3707770**

(43) Veröffentlichungstag der Anmeldung:
**14.09.88 Patentblatt 88/37**

(84) Benannte Vertragsstaaten:
**CH DE FR GB IT LI NL SE**

(71) Anmelder: **ROBERT BOSCH GMBH**
**Postfach 50**
**D-7000 Stuttgart 1(DE)**

(72) Erfinder: **Zimmermann, Peter, Dr. Ing.**
**Aubergenviller Allee**
**D-6110 Dieburg(DE)**

(74) Vertreter: **Uhlig, Helge, Dipl.-Ing.**
**Patent- und Lizenzabteilung c/o Robert**
**Bosch GmbH Geschäftsbereich**
**Industrieausrüstung Postfach 1162**
**D-6120 Erbach/Odenwald(DE)**

(54) **Lageregelung zur reaktionsschnellen Positionierung mit einem Gleichstromservomotor.**

(57) Zur Vereinfachung der Lageregelung zur Positionierung von Gleichstromservomotoren wird anstelle aufwendiger und störanfälliger Istwertaufnehmer für die Drehzahl und den Strom im Leistungsteil ein Mikroprozessor verwendet, der aus den Signalen eines inkrementalen Drehwertgebers als Lageistwertaufnehmer einen Lageistwert, einen Drehzahlistwert und nach Art eines Beobachters einen Stromistwert errechnet. Der Mikroprozessor errechnet mit diesen Werten über einen Drehzahlsollwert und einen Stromsollwert einen Spannungssollwert für die Ansteuerung der Leistungsstufen des Gleichstromservomotors.

EP 0 281 798 A2

Fig. 2

## Lageregelung zur reaktionsschnellen Positionierung mit einem Gleichstromservomotor

Die Erfindung betrifft eine Lageregelung nach dem Oberbegriff des Patentanspruches 1. Zur Lageregelung, ausgehend von einem Lagesollwertsignal, das z. B. in einer numerischen Steuerung für Werkzeugmaschinen oder Industrieroboter erzeugt wird, ist es üblich, diesen Lagesollwert mit einem Lageistwert eine Lageistwertaufnehmers zu vergleichen und aus der Abweichung ein Drehzahlsollwertsignal zu erzeugen, das mit einem Signal aus einem Drehzahlistwertaufnehmer, wie z. B. einem Tachogenerator, verglichen wird. Aus diesen Vergleichsdaten wird dann ein Stromsollwertsignal erzeugt, das wiederum mit Stromistwerten aus einem Stromistwertaufnehmer verglichen wird, um in einem Stromregler die Steuersignale für die Leistungsstufen zur Ansteuerung des Gleichstrommotors zu erzeugen.

Hierbei ist ein erheblicher Aufwand an Istwertaufnehmern erforderlich, die häufig in einem Bereich mit erschwerten Umweltbedingungen liegen und daher zusammmen mit den Zuleitungen auf Fehlerfreiheit überwacht werden müssen. Es ist Aufgabe der Erfindung, diesen Aufwand zu verringern und die Lageregelung weniger störanfällig zu gestalten.

Diese Aufgabe wird durch im Patentanspruch 1 gekennzeichneten Merkmale gelöst. Es ist an sich bekannt (siehe DE-PS 31 26 277, DE-OS 33 41 731, EP-OS 00 81 684 und EP-OS 00 61 824), zur Drehzahlregelung mit Hilfe eines Mikroprozessors einen Gleichstrommotor zu steuern, wobei lediglich ein Stromistwertaufnehmer oder ein Lageistwertaufnehmer vorgese hen ist. Um eine reaktionsschnelle, stabile Lageregelung zu erzielen, wird jedoch, wie dies z. B. in der EP-OS 00 89 150 Fig. 5 dargestellt ist, die Erfassung der Position, der Drehzahl und des Istwertstromes erforderlich.

Im Gegensatz hierzu kommt die Lageregelung gemäß der Erfindung lediglich mit einem Lageistwertaufnehmer aus, der ein einfacher hochauflösender Inkrementalgeber sein kann, der sich leicht - in bekannter Weise - auf Fehlerfreiheit überwachen läßt. Vorteilhafte Ausgestaltungen der Erfindungen sind in den Unteransprüchen gekennzeichnet.

Die Erfindung wird anhand der in der Zeichnung dargestellten Ausführungsformen näher erläutert.

Fig. 1 zeigt das bekannte Schaltungsprinzip einer Lageregelung für rekationsschnelle Servomotore, wie sie bei numerischen Steuerungen üblich sind,

Fig. 2 zeigt ein Lageregelungsprinzip gemäß der Erfindung und

Fig. 3 ein Ausführungsbeispiel der erfindungsgemäßen Lageregelung mit Mikroprozessor.

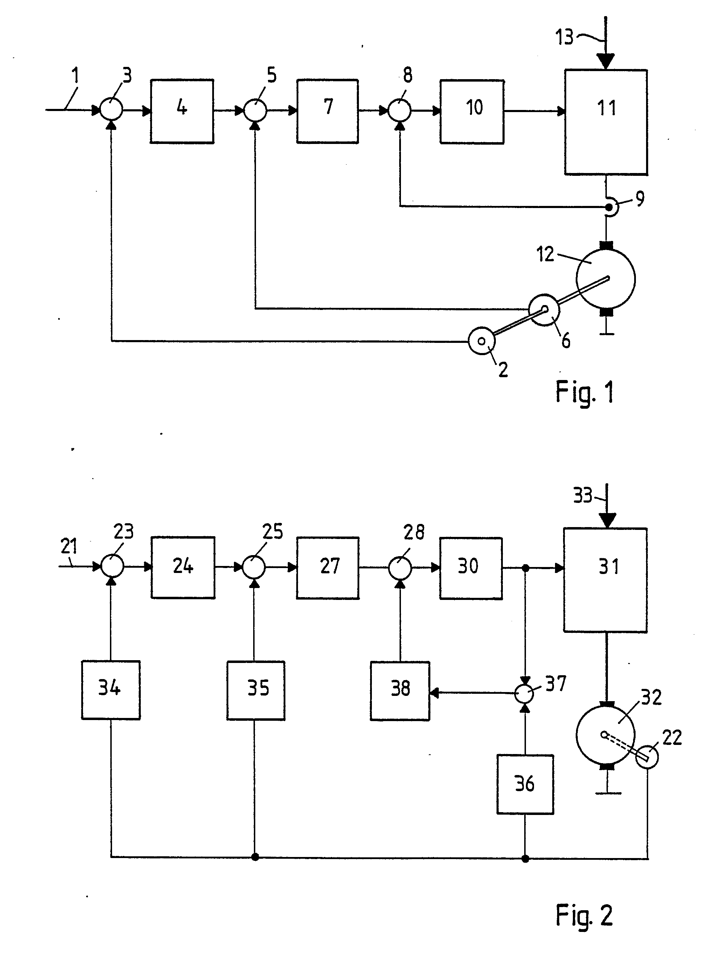

In Fig. 1 wird ein über die Leitung 1 eingegebenes Lagesollwertsignal mit einem Lageistwertsignal aus einem Lageistwertaufnehmer 2 in einem - üblicherweise als Subtrahierstufe wirkenden - Vergleicher 3 verglichen und das sich aus der Abweichung ergebende Signal einem Lageregler 4 zugeführt. Im Lageregler (üblicherweise ein P-Regler) wird ein Drehzahlsollwertsignal erzeugt, das einem zweiten Vergleicher 5 zugeführt ist, der dieses Signal mit einem Drehzahlistwertsignal aus einem Drehzahlistwertgeber 6 (üblicherweise ein Tachogenerator) vergleicht. Aus diesem Vergleich wird ein Signal für einen Drehzahlgeber 7 (üblicherweise ein PI-Regler) gewonnen, der ein Stromsollwertsignal für einen dritten Vergleicher 8 erzeugt, der dieses Signal mit einem Stromistwertsignal aus einem Stromistwertaufnehmer 9 vergleicht. Das im dritten Vergleicher 8 erzeugte Signal wird dann einem Stromregler 10 zur Erzeugung von Ansteuersignalen für die Leistungsstufen 11 zugeführt, die den Strom für einen Gleichstrommtor 12 steuern. Der Leistungsverstärker erhält hierbei über die Leitung 13 eine Gleichspannung, üblicherweise aus einem Netzgleichrichter.

In Fig. 2 ist ein gleichartiges Wirkungsprinzip gemäß der Erfindung dargestellt, wobei hier jedoch nur ein Lageistwertaufnehmer 22 vorgesehen ist und die Istwerte für die Drehzahl und den Strom aus den Signalen dieses Lageistwertaufnehmers 22 errechnet werden. Hierbei werden die Winkel-Inkremente aus dem Lageistwertaufnehmer 22 in einer Summierstufe 34 zu einem Lageistwert für den als Substrahierstufe aufgebauten ersten Vergleicher 23 aufsummiert und in einem Differentationsglied 35 mit einer Zählung über eine vorgegebene Torzeit ein Drehzahlistwertsignal gebildet, das dem zweiten Vergleicher 25 zugeführt wird. Die Winkelinkremente aus dem Lageistwertaufnehmer 22 werden weiterhin einer Stufe 36 zugeführt, die mit Hilfe zuvor eingegebener Motorkenndaten und der Drehzahl (durch Differentation der Winkelinkremente) den momentanen Wert für die EMK des Gleichstrommotors 32 ermittelt und diesen Wert in einem vierten Vergleicher 37 mit einer Sollwertspannung vergleicht, die am Ausgang eines Stromreglers 30 anliegt. Das Ausgangssignal des vierten Vergleichers 37 wird einem Beobachter 38 für den Stromistwert zugeführt, der mit Hilfe weiterer zuvor eingegebener Motorkenndaten, insbesondere für den ohmschen und induktiven Wiederstand des Gleichstrommotors 32, ein Stromistwertsignal für den dritten Vergleicher 28 ermittelt. Die Ermittlung des Stromistwertsignales erfolgt hierbei nach Art der beobachtergestützten Regelung, wie sie z. B. in der Zeitschrift "Automatisierungstechnik" at 34. Jahrgang Heft 1/1986 Seiten 38 bis 42, Heft 2/1986 Seiten 72 bis 77 und Heft 6/1986 Seiten 247 bis 251 beschrieben ist.

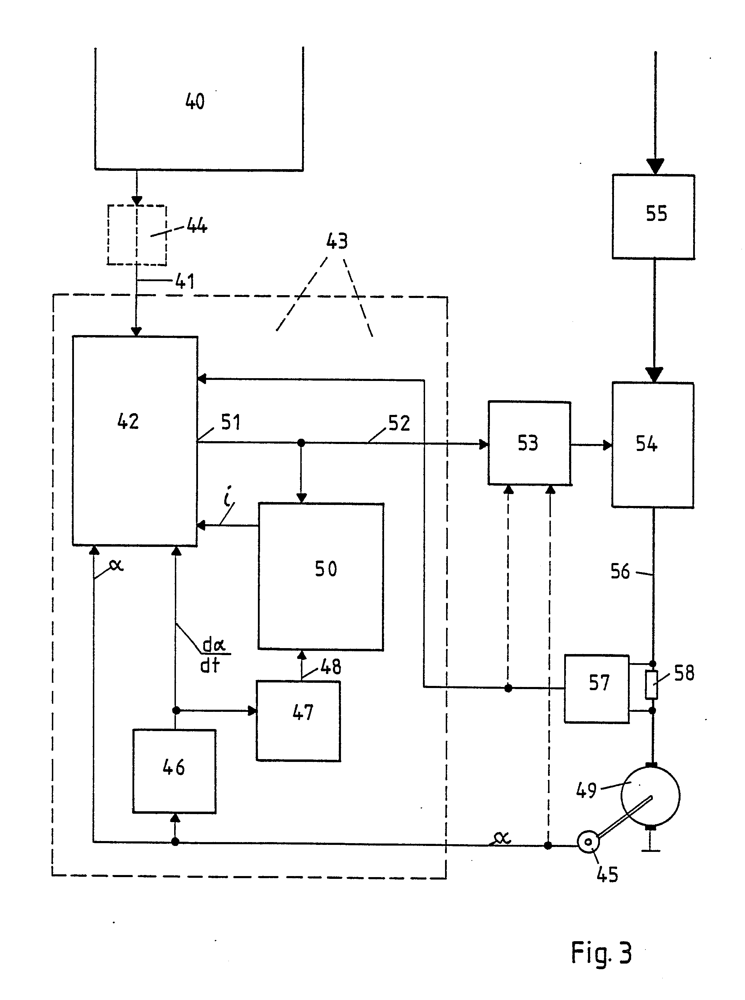

Gemäß der Erfindung werden die Werte für die am Ausgang des Stromreglers 30 anliegende Sollwertspannung mit einem Mikroprozessor digital ermittelt, wobei dieser die Aufgaben der Stufen 23 bis 30 und 34 bis 38 übernimmt. Die Wirkungsweise wird anhand der Fig. 3 näher beschrieben. Aus einer numerischen Steuerung 40 gelangt über eine Leitung 41 ein digitaler Lagesollwert auf Rechnerstufen 42 eines Mikroprozessors 43. Handelt es sich bei dem Lagesollwert aus der Steuerung 40 um ein analoges Signal, kann dieses über einen Analog/Digitalwandler 44 entsprechend umgewandelt werden. In der Rechnerstufen 42 werden, wie in den Stufen 23 bis 30 gemäß Fig. 2, die Werte für die Lageregelung, die Drehzahlregelung und die Stromregelung errechnet, wobei zur Lageregelung die Drehwinkelinkremente $\alpha$ aus dem Lageistwertaufnehmer 45 und zur Drehzahlregelung in einer Differentiationsstufe 46 mit d $\alpha$ / dt, z. B. durch Zählung der Drehwinkelinkremente während einer vorgegebenen Torzeit, ein Drehzahlistwert gebildet wird. In einer Multiplikationsstufe 47 wird dieser Drehzahlistwert weiterhin mit einem zuvor abgespeicherten Motorkennwert K multipliziert, wobei der Faktor K derart gewählt ist, daß am Ausgang 48 der Stufe 47 ein Wert anliegt, welcher der EMK des Gleichstrommotors 49 bei dieser Drehzahl entspricht. Der Ausgang 48 ist mit dem Eingang eines Beobachters 50 verbunden, der aus den gleichfalls zuvor abgespeicherten Motorkenndaten für den ohmschen Widerstand R und der Induktivität L des Gleichstrommotors unter Zugrundelegung der EMK E eine Istwertspannung gemäß $u = R\overset{\circ}{i} + L\overset{\circ}{i} + E$ nach Art eines Beobachters ermittelt, wobei $\overset{\circ}{i}$ dem Wert $\frac{di}{dt}$ entspricht, die Istwertspannung u mit einer Sollwertspannung vergleicht, die am Ausgang 51 der Rechnerstufe 42 anliegt und hieraus einen Stromistwert i ermittelt, der einem weiteren Eingang der Rechnerstufe 42 zugeführt ist.

Der Spannungssollwert am Ausgang 51 wird über eine Leitung 52 und erforderlichenfalls über eine Zwischenstufe 53 den Leistungsstufen 54 für den Gleichstrommotor 49 zugeführt, der seine Spannung über einen Gleichrichter 55 aus dem Versorgungsnetz erhält. Der Spannungssollwert kann in der Zwischenstufe 53 in an sich bekannter Weise zur Impulsbreitenmodulation herangezogen werden und/oder es wird - in gleichfalls bekannter Weise - mit z. B. aus dem Lageistwertaufnehmer 45 abgeleiteten Signalen eine Umschaltung auf die einzelnen entsprechenden Leistungstransistoren der Leistungsstufe für die einzelnen Statorwicklungen eines bürstenlosen Gleichstrommotors bewirkt.

Bei sprunghaften Änderungen des Lagesollwertes auf der Leitung 41 oder starken Laständerungen kann durch einen Sprung des Spannungssollwertes am Ausgang 51 ein zu hoher Strom durch den Gleichstrommotor 49 initiiert werden. Um dies zu vermeiden, kann in der numerischen Steuerung 40 oder in der Rechnerstufe 42 eine Stufe vorgesehen werden, die sprunghafte Änderungen des Lagesollwertes verzögert bzw. begrenzt. Um auch Last-bzw. Trägheitsänderungen zu erfassen, kann es weiterhin von Vorteil sein, in der Zuleitung 56 zum Gleichstrommotor ein einfaches Strommeßglied vorzusehen, das z. B. aus einem kleinen Widerstand in einer Zuleitung 56 besteht, an dem eine Spannung abgegriffen wird, die z. B. über einen Überstromkomparator einen Optokoppler steuert. Dieser Komperator 57 kann dann z. B. durch ändern der Steilheit einer Sollwertrampe, z. B. einer Spannungssollwertrampe, insbesondere bei hoher positiver oder negativer Beschleunigung Überströme verhindern. Unter Umständen kann es auch von Vorteil sein, den gemessenen Stromwert als zusätzliche Störgröße dem Beobachter 50 zuzuführen.

Der Schaltungsaufbau bzw. die Leitungsführung innerhalb des Mikroprozessors ist nicht identisch mit dem in Fig. 3 dargestellten Aufbau, der lediglich dem besseren Verständnis dienen soll. Er wird in der bei Mikroprozessoren üblichen Weise, insbesondere durch die entsprechende Software, bewirkt, die wiederum von der Verwendung des ausgewählten Bautyps abhängig ist.

Die Erfindung kann in gleicher Weise auch bei einem linearen Lageistwertaufnehmer Anwendung finden. Hierbei werden dann anstelle der Winkelinkremente die Weginkremente verwendet.

## Ansprüche

1. Lageregelung zur reaktionsschnellen Positionierung mit einem Gleichstromservomotor, wobei ausgehend von einem Lagesollwertsignal, durch Vergleich mit einem Lageistwertsignal aus einem Lageistwertsignalaufnehmer in einen Lageregler ein Drehzahlsollwertsignal erzeugt wird, das nach Vergleich mit einem Drehzahlistwert in einen Drehzahlregler ein Stromsollwertsignal erstellt, das nach Vergleich mit einem Stromistwert in einem Stromregler Ansteuersignale für den Leistungsverstärker des Gleichstrommotors erzeugt, dadurch gekennzeichnet, daß ein Mikroprozessor (43) vorgesehen ist, der mit Werten des Lageistwertsignales ($\alpha$) aus dem Lageistwertsignalaufnehmer (22, 45) den Drehzahlistwert und mit zuvor eingegebenen Kennwerten (K, R, L) des Gleichstrommotors (32, 49) den Stromistwert (i) nach Art eines Beobachters errechnet. und daß diese Werte der Lageregelung dienen.

2. Lageregelung nach Anspruch 1, dadurch gekennzeichnet, daß der Mikroprozessor (43) einen Spannungssollwert für den Leistungsverstärker (31, 54) errechnet und aus diesem Spannungssollwert sowie abgeleiteten Werten des Lageistwertsignales aus dem Lagewertaufnehmer (22, 45) unter Zugrundelegung der Motorkennwerte (K, R, L) die Stromistwertsignale errechnet.

3. Lageregler nach Anspruch 2, dadurch gekennzeichnet, daß der Spannungssollwert über eine Impulsbreitenmodulation den Leistungsverstärker (54) für einen bürstenlosen Gleichstrommotor (49) steuert.

4. Lageregler nach einem der Ansprüche 1 bis 3, dadurch gekennzeichnet, daß der Lagewertaufnehmer (22, 45) ein inkrementaler Drehwertgeber ist. dessen Ausgangssignale (α) dem Mikroprozessor (43) zugeführt sind, der mit diesen Signalen Lageistwerte, Drehzahlistwerte und Stromistwerte des Gleichstrommotors (32, 49) errechnet.

5. Lageregler nach einem der Ansprüche 1 bis 4, dadurch gekennzeichnet, daß im Lageregelkreis ein Rampengenerator vorgesehen ist, der schnelle Änderungen des Lagesollwertsignales nach einem vorgegebenen Geschwindigkeitsprofil verzögert.

6. Lageregler nach Anspruch 5, dadurch gekennzeichnet, daß ein vereinfachter Stromwertaufnehmer (58) hinter dem Leistungsverstärker (54) für den Gleichstrommotor (49) vorgesehen ist, der nach Überschreiten einer Stromgrenze das Geschwindigkeitsprofil herabsetzt.

7. Lageregler nach Anspruch 6, dadurch gekennzeichnet, daß der Stromwertaufnehmer aus einem kleinen Widerstand (58) im Leistungskreis des Gleichstrommotors (49) besteht, dessen Spannungsabfall über einen Überstromkomparator abgegriffen und über einen Optokoppler das Geschwindigkeitsprofil bei zu hoher positiver und negativer Beschleunigung herabsetzt.

8. Lageregler nach einem der Ansprüche 1 bis 7, dadurch gekennzeichnet, daß der Mikroprozessor (43) durch Summenbildung der Weginkremente (α) eines inkrementalen Lagewertaufnehmers (22, 45) einen Lageistwert errechnet, durch Differentation dieser Weginkremente (α) einen Geschwindigkeitsistwert errechnet, durch Differentation dieser Weginkremente (α) in Verbindung mit zuvor abgespeicherten Motorkenndaten (K) einen EMK-Istwert erstellt, und daß im Mikroprozessor nach Art eines Beobachters ein Stromistwert aus dem EMK-Istwert und einem im Mikroprozessor (43) erzeugten Spannungssollwert mit Hilfe von zuvor abgespeicherten Motorkenndaten für die Induktivität (L) und den Wirkwiderstand (R) erstellt wird.

9. Lageregler nach einem der Ansprüche 1 bis 8, dadurch gekennzeichnet. daß der Gleichstromservomotor als reaktionsschneller Antrieb für einen Vierquadrantensteller dient, wobei der Lageregler über eine Rechnersteuerung digitale Lagesollwertsignale oder analoge Lagesollwertsignale über einen Analog-Digitalwandler erhält.

0 281 798

Fig. 1

Fig. 2

Fig. 3